# EUROPEAN PATENT SPECIFICATION

(11) **EP 1 305 186 B1**
(45) Date of publication and mention of the grant of the patent: **02.04.2008**
(21) Application number: 01960502.1
(22) Date of filing: 17.07.2001
(51) Int. Cl.: B60Q 5/00

(54) **ELECTROMECHANICAL WARNING HORN SYSTEM**
ELEKTROMAGNETISCHE SIGNALHORNEINRICHTUNG
SYSTEME DE KLAXON ELECTROMECANIQUE

(30) Priority: 01.08.2000 IT MI001780
(43) Date of publication of application: 02.05.2003
(73) Proprietor: Fabbrica Italiana Accumulatori Motocarri Montecchio - F.I.A.M.M. S.p.A., 36075 Montecchio Maggiore (Vicenza) (IT)
(72) Inventor: VIERO, Bruno, I-36075 Montecchio Maggiore (IT)
(74) Representative: Siniscalco, Fabio
(86) International application number: PCT/EP2001/008212
(87) International publication number: WO 2002/009974

(56) References cited:
- DE-A- 2 117 320
- GB-A- 1 029 780

## Description

The present invention relates to an electromechanical warning horn system.

More particularly, the present invention relates to an electromechanical warning horn system especially suitable to be applied on motor-vehicles.

Electromechanical warning horn systems are know that comprise a hollow body, open at an end, an electric bobbin housed within said hollow body, and a membrane, provided with a mobile core, fixed at the edge of the open end of said hollow body.

The electric bobbin is fixed to the wall of the closed end of the hollow body and is associated to a contact breaker constituted by a support, a spring provided with electric contacts and an insulating plate sandwiched between said support and said spring. An electromechanical warning horn system of this type disclosing the features of the preamble of claim 1 is for instance known from document DE-A-2 117 320.

As is known, the electromechanical warning horn systems of this type generate during the working undesired electromagnetic transients.

To prevent this drawback, it has been proposed to house in the hollow body, in correspondence of special supports, a resistor of adequate value whose ends are electrically connected to the support and the spring of the contact breaker, resulting in this way parallel to the electric contacts. The presence of the resistor allows to attenuate the entity of the electromagnetic transients, as it allows to cause a drastic drop of the opening and closing overvoltages of the electric contacts.

The introduction of the resistor, while solving on the one hand the problem of the transients, is not free from further drawbacks of both a constructive and a functional character.

A first drawback lies in that the introduction of the resistor constitutes a constructive complication, as it involves the presence of electric connections and special supports, with an ensuing increase in the cost of the warning horn system.

A second drawback lies in that, because of the vibrations and the temperatures deriving both from the running vehicle and the working of said warning horn system, the resistor can be damaged and/or the ends can lose the electric contact which leads to malfunction.

Object of the present invention is to obviate the above drawbacks.

More particularly, object of the present invention is to provide an electromechanical warning horn system which, besides solving the problem of the electromagnetic transients, allows to obviate the drawbacks of a constructive and functional character referred to hereinabove.

According to the present invention, these and still other objects that will be clear thanks to the following description are obtained by means of an electromechanical warning horn system comprising:
- a hollow body whose wall comprises a first cylindrical part closed by a bottom wall, a second flat part, a third cylindrical part and a flanged edge;
- at least an electric bobbin abutting on said bottom wall;
- an elastic membrane, provided with at least a mobile core fixed to said flange-shaped edge of said hollow body;
- at least a contact breaker comprising a support and a spring, each provided with an electric contact, an insulating plate being sandwiched between said support and said spring; wherein said insulating plate is provided with at least a layer of resistive silk-screen ink. Said at least a layer of resistive silk-screen ink has a global resistance suitable to eliminate the electromagnetic transients.

Said at least a layer of resistive silk-screen ink may be coated on one, and preferably both, the surfaces of the insulating plate.

The constructive and functional characteristics of the electromechanical warning horn system of the present invention will be better understood thanks to the following detailed description wherein reference is made to the attached drawings that illustrate an embodiment reported only by way of non limiting example, and wherein:

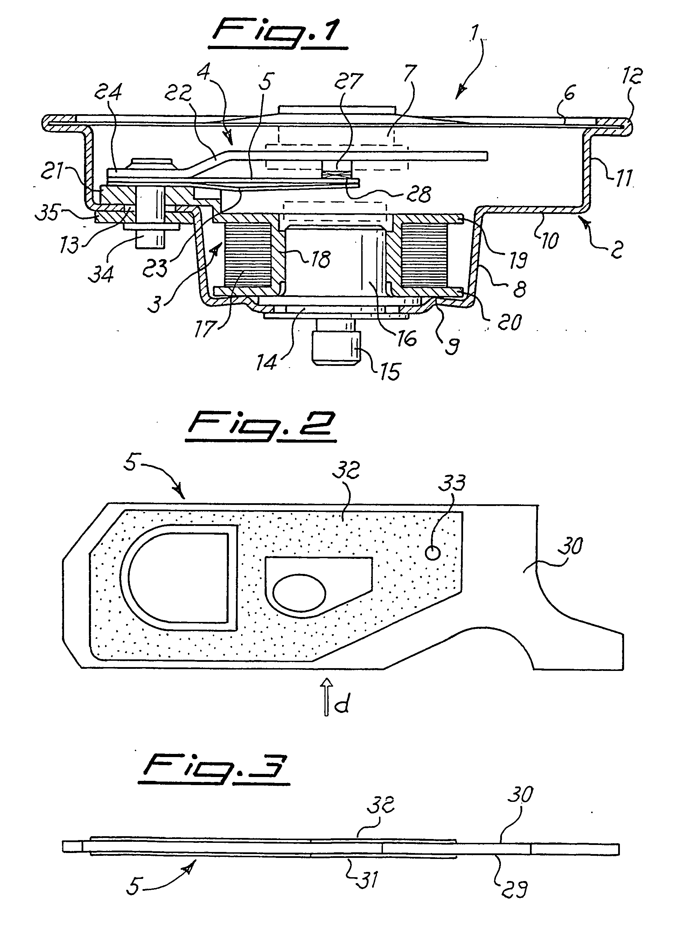

Figure 1 shows the schematic view of a section of the electromechanical warning horn system of the present invention,
Figure 2 shows the schematic front view of the insulating plate of the warning horn system of Figure 1;
Figure 3 shows the schematic lateral view of the plate of Figure 2, according to the "d" direction of Figure 2.

With reference to the attached figures, the electromechanical warning horn system of the present invention, indicated by 1 as a whole, comprises a hollow body 2, an electric bobbin 3, a contact breaker 4 comprising an insulating plate 5, and an elastic membrane 6 provided with a mobile core 7.

The hollow body 2 is defined by a wall comprising a first cylindrical part 8 closed by a bottom wall 9, a second flat part 10 forming a shoulder, a third cylindrical part 11 and a lower flanged edge 12. The flat part 10 is provided with a through-hole 13.

To the bottom wall 9 a supporting element 14 is associated that is provided with a threaded pin 15 for the fastening to the vehicle and a cylindrical protrusion 16 suitable to constitute the fixed core of bobbin 3; said threaded pin 15 and said cylindrical protrusion 16 being located, respectively, on the external part and the internal part of the hollow body 2.

Bobbin 3 has a coil 17wound on a reel 18. Reel 18 comprises a central hole and protruding flanges 19, 20: The diameter of the central hole is equal to the external diameter of protrusion 16; the external diameter of flanges 19 and 20 is substantially equal to the internal diameter of the first cylindrical part 8 of the hollow body 2, and the height of reel 18 is substantially equal to said first cylindrical part 8.

To the flange 19 there is radially associated, and forms an integral part thereof, an extension 21, suitable to fix reel 18, and therefore bobbin 3, to the hollow body 2, in correspondence of the shoulder constituted by the flat part 10.

The contact breaker 4 comprises a support 22, a spring 23 and the insulating plate 5. Support 22 has a fastening zone 24 facing the flat part 10 of the hollow body 2, and is provided with a first electric contact 27, preferably made from tungsten. Sprig 23 is constituted by a laminar element facing support 22 starting from zone 24 until it covers the electric contact 27. At the end corresponding to the electric contact 27, said spring 23 is provided with a second electric contact 28, preferably from tungsten, mutually facing said electric contact 27.

The insulating plate 5 is sandwiched between support 22 and spring 23 and is extended, in the same way as spring 23, starting from zone 24 of support 22 until it covers said electric contacts 27 and 28. Said insulating plate 5 has on each of the opposite surfaces 29 and 30 at least a layer 31 and 32 of resistive silk-screen ink preferably coated with an often polymeric (PTE) film technology on the respective surfaces 29 and 30. A hole 33 allows to connect without interruption, thank to the resistive silk-screen ink or through suitable conductive means, the opposite layers 31 and 32. The layers 31 and 32 of resistive silk-screen ink are such as to provide a global electric resistance sufficient to eliminate the undesired electromagnetic transients ensuing from the opening and closing of the electric contacts. Preferably, said insulating plate 5 is constituted by bakelized cloth, and the resistive silk-screen ink is selected from among 10 and 40 Ω², preferably 22 and 28 Ω², while the global resistance is selected from among the values 50 and 130 Ω and preferably 70 and 110 Ω.

For the assembly of the contact breaker 4 of the electromechanical warning horn system of the present invention, a rivet 34 is caused to pass through a base 35 from plastic material, hole 13 of the flat part 10 of the hollow body 2, extension 21 of reel 18, spring 23, the insulating plate 5 and the fastening zone 24 of support 22. Rivet 34 is then riveted and fixes in this way bobbin 3 and the contact breaker 4 to the hollow body 2. In this way, layers 31 and 32 of resistive silk-screen ink are electrically connected to the electric contacts 27 and 28 through spring 23 and support 22 respectively, so as to constitute the electric resistance necessary to eliminate the undesired electromagnetic transients.

Membrane 6 provided with a mobile core 7 is then fixed by means of a clinching to the flange-shaped edge 12 of the hollow body 2, to complete the assembly.

In resting conditions, the mobile core 7 goes away from bobbin 3, the electric contact 28 abuts, under the action of spring 23, on the electric contact 27, so that the electric circuit of the warning horn system is closed and ready to be controlled.

During the running of the electromechanical warning horn system of the present invention, when the control device is activated, the electric circuit is complete, and therefore bobbin 3 draws the mobile core 7, associated to membrane 6, that approaches the fixed core 16. During this movement, the mobile core 7 acts on the insulating plate 5 which, in its turn, acts on spring 23, opening the electric contacts 27 and 28, causing thereby the interruption of the electric circuit. The overvoltage which generates at this moment in correspondence of the electric contacts 27 and 28, leading even to the formation of an electric arc, is absorbed by the resistance of layers 31 and 32 of resistive silk-screen ink, in parallel with the electric contacts 27 and 28.

With the interruption of the electric circuit, bobbin 3 releases the mobile core 7 and therefore membrane 6 which goes back to its starting position, allowing in this way spring 23 to bring again the electric contact 28 in abutment with the electric contact 27, so that a new cycle can start.

It is now obvious that the insulating plate 5 provided with layers 31 and 32 of resistive silk-screen ink can provide the electric resistance necessary to eliminate the unpleasant electromagnetic transients, and it is as much obvious how the drawbacks arising from the application of the electric resistance of the known art are overcome and eliminated.

The electromechanical warning horn system according to the present invention has allowed the drastic drop of the undesired electromagnetic transients, associated to an unusual constructive simplicity due to the elimination of the electric resistance as an autonomous element and the elimination of the related supports.

While the present invention has been described in conjunction with a specific embodiment, it is obvious that many alternatives and variations will be apparent to those skilled in the art in the light of the foregoing description.

Accordingly, the invention is intended to embrace all of the alternatives and variations that fall within the scope of the invention defined by the appended claims.

## Claims

1. An electromechanical warning horn system (1) comprising:
- a hollow body (2) whose wall comprises a first cylindrical part (8) closed by a bottom wall (9), a second flat part (10), a third cylindrical part (11) and a flanged edge (12);
- at least an electric bobbin (3) abutting on said bottom wall (9);
- an elastic membrane (6), provided with at least a mobile core (7), fixed to said flange-shaped edge (12) of said hollow body (2);
- at least a contact breaker (4) comprising a support (22) and a spring (23), each provided with an electric contact (27, 28), an insulating plate (5) being sandwiched between said support (22) and said spring (23), **characterized in that** said insulating plate (5) is provided with at least a layer (31, 32) of resistive silk-screen ink.

2. The electromechanical warning horn system (1) according to claim 1, **characterized in that** the at least a layer (31, 32) of silk-screen ink has a global resistance suitable to eliminate electromagnetic transients.

3. The electromechanical warning horn system (1) according to claim 1, **characterized in that** the at least a layer (31, 32) of silk-screen ink is coated on both surfaces (29, 30) of the insulating plate (5).

4. The electromechanical warning horn system (1) according to claim 3, **characterized in that** the layers (31,32) coated on both surfaces (29, 30) of the insulating plate (5) are connected to each other through a through-hole (33).

5. The electromechanical warning horn system (1) according to any of the preceding claims; **characterized in that** said insulating plate (5) is preferably made from bakelized cloth.

6. The electromechanical warning horn system (1) according to any of claims 1-4, **characterized in that** said at least a layer (31, 32) of resistive silk-screen ink is selected from among the values 10 Ω² and 40 Ω², and the global resistance is selected from among the values 50 Ω and 130 Ω.

7. The electromechanical warning horn system (1) according to claim 6, **characterized in that** said at least one layer (31, 32) of resistive silk-screen ink is selected from among the values of 22 Ω² and 28 Ω² and has a global resistance comprised between 70 Ω and 110 Ω.

## Patentansprüche

1. Elektromechanisches Signalhupensystem (1), umfassend:
- einen hohlen Körper (2), dessen Wand einen ersten zylinderischen Teil (8), welcher durch eine Bodenwand (9) geschlossen ist, einen zweiten flachen Teil (10), einen dritten zylindrischen Teil (11) und eine mit einem Flansch versehene Kante (12) umfasst;
- zumindest eine elektrische Spule (3), welche an der Bodenwand (9) angrenzt;
- eine elastische Membran (6), welche mit zumindest einem mobilen Kern (7) versehen ist, welcher an der flanschförmigen Kante (12) des hohlen Körpers (2) fixiert ist;
- zumindest einen Kontaktunterbrecher (4), welcher einen Träger (22) und eine Feder (23) umfasst, wobei jeder mit einem elektrischen Kontakt (27, 28), einer Isolierplatte (5), welche zwischen dem Träger (22) und der Feder (23) zwischengelegt ist, versehen ist, **dadurch gekennzeichnet, dass** die Isolierplatte (5) mit zumindest einer Schicht (31, 32) einer mit einem Widerstand behafteten Siebdrucktinte versehen ist.

2. Elektromechanisches Signalhupensystem (1) gemäß Anspruch 1, **dadurch gekennzeichnet, dass** die zumindest eine Schicht (31, 32) der Siebdrucktinte einen globalen Widerstand aufweist, welcher geeignet ist, um elektromagnetische Störungen zu eliminieren.

3. Elektromechanisches Signalhupensystem (1) gemäß Anspruch 1, **dadurch gekennzeichnet, dass** die zumindest eine Schicht (31, 32) auf beide Oberflächen (29, 30) der Isolierplatte (5) aufgetragen ist.

4. Elektromechanisches Signalhupensystem (1) gemäß Anspruch 3, **dadurch gekennzeichnet, dass** die Schichten (31, 32), welche auf beiden Oberflächen (29, 30) der Isolierplatte (5) aufgetragen sind, miteinander durch ein Durchgangsloch (33) verbunden sind.

5. Elektromechanisches Signalhupensystem (1) gemäß irgendeinem der vorherigen Ansprüche, **dadurch gekennzeichnet, dass** die Isolierplatte (5) vorzugsweise aus bakelisiertem Gewebe hergestellt ist.

6. Elektromechanisches Signalhupensystem (1) gemäß irgendeinem der Ansprüche 1 - 4, **dadurch gekennzeichnet, dass** die zumindest eine Schicht (31, 32) der mit einem Widerstand behafteten Siebdrucktinte ausgewählt ist unter den Werten 10 Ω² und 40 Ω², und der globale Widerstand ausgewählt ist unter den Werten 50 Ω und 130 Ω.

7. Elektromechanisches Signalhupensystem (1) gemäß Anspruch 6, **dadurch gekennzeichnet, dass** die zumindest eine Schicht (31, 32) der mit einem Widerstand behafteten Siebdrucktinte ausgewählt ist unter den Werten von 22 Ω² und 28 Ω² und einen globalen Widerstand aufweist, welcher zwischen 70 Ω und 110 Ω umfasst ist.

## Revendications

1. Système de klaxon électromécanique (1) comprenant :
un corps creux (2) dont la paroi comprend une première partie cylindrique (8) fermée par une paroi inférieure (9), une deuxième partie plate (10), une troisième partie cylindrique (11) et un bord à rebord (12) ;
au moins une bobine électrique (3) en butée sur ladite paroi inférieure (9) ;
une membrane élastique (6), prévue avec au moins un noyau mobile (7) fixé sur ledit bord en forme de rebord (12) dudit corps creux (2) ;
au moins un rupteur (4) comprenant un support (22) et un ressort (23), chacun doté d'un contact électrique (27, 28), une plaque isolante (5) étant prise en sandwich entre ledit support (22) et ledit ressort (23), **caractérisé en ce que** ladite plaque isolante (5) est dotée d'au moins une couche (31, 32) d'encre pour sérigraphie résistive.

2. Système de klaxon électromécanique (1) selon la revendication 1, **caractérisé en ce que** la au moins une couche (31, 32) d'encre pour sérigraphie a une résistance globale appropriée pour supprimer les surtensions transitoires électromagnétiques.

3. Système de klaxon électromécanique (1) selon la revendication 1, **caractérisé en ce que** la au moins une couche (31, 32) d'encre pour sérigraphie est appliquée sur les deux surfaces (29, 30) de la plaque isolante (5).

4. Système de klaxon électromécanique (1) selon la revendication 3, **caractérisé en ce que** les couches (31, 32) appliquées sur les deux surfaces (29, 30) de la plaque isolante (5) sont raccordées entre elles par un trou de passage (33).

5. Système de klaxon électromécanique (1) selon l'une quelconque des revendications précédentes, **caractérisé en ce que** ladite plaque isolante (5) est de préférence réalisée à partir d'un tissu bakélisé.

6. Système de klaxon électromécanique (1) selon l'une quelconque des revendications 1 à 4, **caractérisé en ce que** ladite au moins une couche (31, 32) d'encre pour sérigraphie résistive est choisie parmi les valeurs 10 Ω² et 40 Ω² et la résistance globale est choisie parmi les valeurs de 50 Ω et 130 Ω.

7. Système de klaxon électromécanique (1) selon la revendication 6, **caractérisé en ce que** ladite au moins une couche (31, 32) de l'encre pour sérigraphie résistive est choisie parmi les valeurs de 22 Ω² et 28 Ω² et a une résistance globale comprise entre 70 Ω et 110 Ω.
